# EUROPÄISCHE PATENTSCHRIFT

(11) **EP 3 912 892 B1**
(45) Veröffentlichungstag und Bekanntmachung des Hinweises auf die Patenterteilung: **27.04.2022**
(21) Anmeldenummer: 20175864.6
(22) Anmeldetag: 20.05.2020
(51) Int. Cl.: B62H 5/00, B62H 5/04, B62J 11/00, B62K 21/12, B62K 21/18, B62K 21/24

(54) **SCHNELL LÖSBARER UND ROTIERBARER FAHRRADLENKERVORBAU**
QUICK RELEASE AND ROTATABLE BICYCLE HANDLEBAR STEM
POTENCE POUR GUIDONS DE BICYCLETTE RAPIDEMENT LIBÉRABLE ET ROTATIVE

(43) Veröffentlichungstag der Anmeldung: 24.11.2021
(73) Patentinhaber: Wedemann, Horst, 20146 Hamburg (DE)
(72) Erfinder: Wedemann, Horst, 20146 Hamburg (DE)
(74) Vertreter: Raffay & Fleck

(56) Entgegenhaltungen:
- CN-B- 101 987 647
- CN-U- 202 541 746

## Beschreibung

Die Erfindung betrifft ein Lenkervorbau, der ein einfaches und schnelles Lösen und Verdrehen und ein einfaches und sicheres Zurückstellen und Fixieren des Vorbaus mit dem daran befestigten Lenker ermöglicht. Dies ermöglicht eine platzsparende Lagerung zum Beispiel eines Fahrrades.

Derartige Lösungen sind zahlreich aus dem Stand der Technik bekannt. Sie erfordern aber alle großen konstruktiven Aufwand, insbesondere beim Nachrüsten oder sind kompliziert, teuer oder unsicher oder besonders diebstahlsgefährdet.

So ist eine solche Lösung beispielsweise aus der US 2006/0096408 A1 bekannt. Diese Lösung ist jedoch besonders diebstahlgefährdet und benötigt mehrere Handgriffe zum Verdrehen und zurückstellen. Zudem erfordert er einen speziellen Lenkschaft, was die Nachrüstung aufwändig und materialintensiv gestaltet. Darüber hinaus ist er mit fest mit der Gabel verbundenen Lenkschäften nicht nutzbar.

Aus der CN 202541 746 U , welche die Präambel des Anspruchs 1 zeigt, ist ein Vorbau mit Schnellspanner und mit einer oberseitigen und unterseitigen Klemmmanschette bekannt. Aus der CN 101987647 B ist ein Gabelschaft mit federbelasteter Sicherungsnase gegen unbeabsichtigtes Abziehen eines Vorbaus bekannt.

Aufgabe der Erfindung ist es, eine besonders einfache, diebstahlsicherere und vielseitig einsetzbare Alternative mit geringem Fertigungsaufwand bereit zu stellen, die auch einfach nachrüstbar ist.

Gelöst wird diese Aufgabe durch einen Vorbausatz nach Anspruch 1 und ein Fahrzeug nach Anspruch 9, die Ansprüche 2 bis 8 geben vorteilhafte Weiterbildungen an, die sich auch im Fahrzeug realisieren lassen.

Ein erfindungsgemäßer Vorbausatz für ein Fahrzeug mit einem, insbesondere einzigen einteiligen, runden Gabelschaft, insbesondere für ein Fahrrad, weist einen Vorbau und mindestens eine, insbesondere genau eine, mit dem Gabelschaft ortsfest verbindbare, insbesondere verklemmbare, Sperrvorrichtung auf.

Der Vorbau weist dabei mindestens eine lösbare Klemmspange zum Umschließen des runden Gabelschafts und mindestens ein Spannmittel zum reversibel lösbaren Verklemmen der mindestens einen Klemmspange auf dem Gabelschaft auf. Dabei ist die mindestens eine Klemmspange so eingerichtet ist, dass sie in einer durch das mindestens eine Spannmittel auf dem Gabelschaft verklemmten Position eine Rotation des Vorbaus um den Gabelschaft verhindert und in einer gelösten Position die Rotation des Vorbaus um den Gabelschaft nicht verhindert. Verhindern einer Rotation bedeutet insbesondere, dass die Rotation bis zu einem Drehmoment von mindestens 150 Nm, insbesondere mindestens 250 Nm, verhindert ist. Nicht verhindern bedeutet insbesondere, dass eine Rotation maximal 10 Nm, insbesondere maximal 4 Nm, als Drehmoment erfordert.

Weiterhin weist das mindestens eine Spannmittel einen Handgriffabschnitt zum Bewegen, insbesondere unmittelbar, mittels einer Hand auf, wobei die Bewegung des Handriffabschnitts in eine erste Richtung oder Drehrichtung ein reversibles Verklemmen der mindestens einen Klemmspange auf dem Gabelschaft mittels des Spannmittels bewirkt und wobei die Bewegung des Handriffabschnitts in eine zweite, insbesondere der ersten entgegengesetzte, Richtung oder Drehrichtung ein reversibles Lösen der Verklemmung der mindestens einen Klemmspange auf dem Gabelschaft bewirkt, und/oder ist der Vorbau so ausgelegt ist, dass mit dem mindestens einen Spannmittel, insbesondere mit einer menschlichen Hand, insbesondere werkzeuglos, die mindestens eine Klemmspange von der verklemmten in die gelöste und von der gelösten in die verklemmte Position überführt werden kann. Dabei bewirkt insbesondere die Bewegung Spannmittels in eine erste Richtung oder Drehrichtung ein reversibles Verklemmen der mindestens einen Klemmspange auf dem Gabelschaft mittels des Spannmittels und die Bewegung des Spannmittels in eine zweite, insbesondere der ersten entgegengesetzte, Richtung oder Drehrichtung ein reversibles Lösen der Verklemmung der mindestens einen Klemmspange auf dem Gabelschaft.

Bevorzugt ist das Spannmittel ein Schnellspanner, eine Flügelmutter, Flügelschraube, Rändelschraube und/oder Knebelschraube, eine Schraube, eine Inbusschraube mit Pin oder eine Torxschraube mit Pin. Die Schraube, Inbus- oder Torxschraube ist insbesondere so angeordnet und/oder der Vorbau ist insbesondere so ausgebildet, dass sie und/oder ihr Schraubenkopf in der in der verklemmten Position im Vorbau versenkt ist. Dies reduziert die Diebstahls- und Sabotagegefahr weiter. Eine Schnellspanner, eine Flügelmutter, Flügelschraube, Rändelschraube und/oder Knebelschraube hingegen ermöglichen die werkzeuglose Nutzung.

Insbesondere erfordert das Überführen zwischen verklemmter und gelöster Position ein Drehmoment von weniger als 10 Nm und/oder eine Kraft von weniger als 50 N.

Insbesondere ist der Vorbau eingerichtet, den Gabelschaft, insbesondere ringförmig, zu umschließen und/oder von außen auf dem Gabelschaft verklemmt zu werden.

Erfindungsgemäß ist der Vorbausatz so eingerichtet, dass im auf dem Gabelschaft montierten Zustand die mit dem Gabelschaft ortsfest verbundene Sperrvorrichtung zumindest in der gelösten Position, insbesondere aber auch in der verklemmten Position, der mindestens einen Klemmspange das Abziehen des Vorbaus vom Gabelschaft verhindert.

Im montierten Zustand bedeutet insbesondere, dass die Sperrvorrichtung auf einem Gabelschaft verklemmt ist, insbesondere den Gabelschaft umschließend und/oder von außen, und der Vorbau auf demselben Gabelschaft, insbesondere den Gabelschaft umschließend, angeordnet ist, insbesondere unmittelbar angrenzend, insbesondere oberhalb oder unterhalb, der Sperrvorrichtung, insbesondere so, dass Sperrvorrichtung und Vorbau ineinander greifen und/oder sich teilweise umschließen und/oder formschlüssig miteinander verbunden und/oder gekoppelt sind. Insbesondere ist am Vorbau auch ein Lenket montiert.

Insbesondere handelt es sich bei dem Gabelschaft um ein Rundrohr oder einen runden Stab mit einem Außendurchmesser im Bereich von 2 bis 5 cm, insbesondere von 22 mm bis 29 mm, insbesondere von 21, 22, 25, 25, 28, 32, 35 oder 38 mm.

Insbesondere wird durch die Sperrvorrichtung ein Abziehen insbesondere zum freien Ende des Gabelschafts und/oder vom Steuersatz und/oder von der Gabel und/oder Radaufnahme weg verhindert, insbesondere wird durch die Sperrvorrichtung aber auch die Bewegung in entgegengerichtete axiale Richtung des Gabelschafts verhindert.

Dies kann beispielsweise durch eine Vergrößerung des Außendurchmessers durch die auf dem Gabelschaft montierte Sperrvorrichtung realisiert werden, sodass der Innendurchmesser der Klemmspange auch in gelöster Position nicht über die Sperrvorrichtung geschoben werden kann. In diesem Fall wir die Sperrvorrichtung auf der vom Steuersatz und/oder der Gabel abgewandten Seite des Vorbaus auf dem Gabelschaft montiert, insbesondere endständig auf dem Gabelschaft montiert, bzw. ist die Sperrvorrichtung entsprechend eingerichtet.

Erfindungsgemäß wird dies durch ein Hintergreifen der Sperrvorrichtung durch den Vorbau und/oder des Vorbaus durch die Sperrvorrichtung realisiert werden. Dazu weist die Sperrvorrichtung und/oder der Vorbau insbesondere ein Sicherungselement, beispielsweise in Form eines hakenförmigen oder pilzförmigen Fortsatz, auf, das insbesondere eingerichtet ist, hinter und/oder um das andere Bauteil zu greifen und/oder im auf dem Gabelschaft montierten Zustand hinter und/oder um das andere Bauteil greift. Dieses Hintergreifen ist im auf dem Gabelschaft montierten Zustand insbesondere in der verklemmten und gelösten Position und/oder insbesondere unabhängig von der rotativen Lage des Vorbaus relativ zur Sperrvorrichtung, zumindest allen solchen rotativen Lagen, die im auf dem Gabelschaft montierten Zustand des Vorbausatzes nicht verhindert werden, gegeben.

Insbesondere ist die Sperrvorrichtung ringförmig ausgebildet und/oder so ausgebildet, dass sie geeignet ist, den Gabelschaft zu umschließen. Insbesondere ist die Sperrvorrichtung eingerichtet, auf dem Gabelschaft verklemmt zu werden. Dazu weist sie insbesondere ein Sperrvorrichtungsspannmittel auf, dass insbesondere werkezuglos nicht zu lösen ist und/oder insbesondere eingerichtet mit einem Drehmoment im Bereich von 4 bis 20 Nm gedreht zu werden, und so die Sperrvorrichtung auf dem Gabelschaft zu verklemmen. Insbesondere ist die Sperrvorrichtung als Klemmspange ausgeführt. Bevorzugt ist das Sperrvorrichtungsspannmittel kein Schnellspanner, keine Flügelmutter, keine Flügelschraube, keine Rändelschraube und/oder keine Knebelschraube. Bevorzugt ist das Sperrvorrichtungsspannmittel eine Schraube, eine Inbusschraube mit Pin oder eine Torxschraube mit Pin. Das Sperrvorrichtungsspannmittel und/oder die Sperrvorrichtung ist/sind insbesondere so ausgebildet, dass das Sperrvorrichtungsspannmittel und/oder sein Schraubenkopf in der verklemmten Position der Sperrvorrichtung in der Sperrvorrichtung versenkt ist. Dies reduziert die Diebstahls- und Sabotagegefahr weiter.

Mit Vorteil ist die Sperrvorrichtung eingerichtet, insbesondere unter Ausbildung einer formschlüssigen Verbindung, mit dem Vorbau, durch eine Begrenzung der Bewegung des Vorbaus entlang des Gebelschafts das Abziehen des Vorbaus vom Gabelschaft zu verhindern, wobei insbesondere die Sperrvorrichtung zum Verhindern des Abziehens mindestens ein Sicherungselement aufweist, welches hinter oder in den Vorbau, insbesondere hinter oder in ein an dem Vorbau angeordnetes Sperrelement greift, oder die Sperrvorrichtung zum Verhindern des Abziehens an dem Vorbau, insbesondere formschlüssig, anliegt.

Bevorzugt weist/weisen die Sperrvorrichtung und/oder der Vorbau mindestens einen ersten Vorsprung und/oder mindestens eine erste Ausnehmung zum Begrenzen der Rotation des Vorbaus auf dem Gabelschaft relativ zur Sperrvorrichtung im auf dem Gabelschaft montierten Zustand des Vorbausatz auf. Dabei ist die Rotationsrichtung insbesondere eine um die Längsachse des Gabelschafts. Insbesondere ist/sind die mindestens eine erste Ausnehmung und/oder der mindestens eine erste Vorsprung derart ausgebildet und/oder angeordnet, dass die Begrenzung beim Anschlag an die Begrenzung eine vorbestimmte Rotationsstellung des Vorbaus relativ zur Sperrvorrichtung definiert, wobei der mindestens eine erste Vorsprung und/oder die mindestens eine erste Ausnehmung in der gelösten Position der Klemmspange die Rotation des Vorbaus um den Gabelschaft auf einen Rotationswinkel von weniger als 360° beschränkt.

Dadurch kann beispielsweise die Geradeausfahrstellung des Vorbaus auf dem Gabelschaft durch die vorbestimmte Rotationsstellung gegeben oder definiert sein. Dies ermöglicht es zuverlässig und einfach die Geradeausfahrstellung zu finden und dann durch verklemmen der Klemmspange des Vorbaus zu fixieren. Durch die Begrenzung der Rotation wird ein Verwickeln und/oder Beschädigen der Leitungen und/oder Züge von Bremsen, Schaltung, Licht und anderen am Lenker befestigten Vorrichtung verhindert.

Vorteilhafterweise ist der Vorbausatz eingerichtet, im auf dem Gabelschaft montierten Zustand des Vorbausatz in der gelösten Position der Klemmspange eine Rotation des Vorbaus um den Gabelschaft relativ zur Sperrvorrichtung, insbesondere in einer ersten Rotationsrichtung in die durch die Begrenzung vorbestimmte Rotationsstellung des Vorbaus relativ zur Sperrvorrichtung zu erlauben, in einer zweiten der ersten Rotationsrichtung entgegengesetzten Rotationsrichtung aber zu verhindern, insbesondere so, dass dies ohne Demontage des Vorbausatz nicht möglich ist. Dadurch kann zum Beispiel verhindert werden, dass durch eine um 360° gedrehte Stellung ein zu geringes Leitungs- oder Zugspiel gegeben ist, um ein sicheres Lenken zu ermöglichen.

Insbesondere wird die Rotation auf einen Winkelbereich von weniger als 350°, insbesondere weniger als 345°, insbesondere weniger als 340° zu begrenzen. Dies ermöglicht ein einfaches Bemerken, der Verklemmung nicht in der vorbestimmten Stellung. Mit Vorteil ist eine eine Rotation des Vorbaus um den Gabelschaft relativ zur Sperrvorrichtung so auf weniger als 360°, insbesondere weniger als 350°, insbesondere weniger als 345°, insbesondere weniger als 340°, begrenzt, dass eine Rotation um 360°, insbesondere weniger als 350°, insbesondere weniger als 345°, insbesondere weniger als 340°, nur nach Demontage des Vorbausatz möglich ist.

Mit besonderem Vorteil erlaubt die mindestens eine erste Ausnehmung und/oder der mindestens eine erste Vorsprung und/oder der Vorbausatz im auf dem Gabelschaft montierten Zustand des Vorbausatz in der gelösten Position der Klemmspange eine Rotation des Vorbaus um den Gabelschaft relativ zur Sperrvorrichtung von mindestens 10°, insbesondere um mindestens 80°, insbesondere um die Lengsachse des Gabelschafts, und/oder insbesondere ohne ein weiteres Mittel betätigen zu müssen und/oder eine weitere Entsperrung, insbesondere aus der vorbestimmten Rotationsstellung heraus, in diese hinein und/oder aus einer um 90° von der vorbestimmten Position im auf dem Gabelschaft montierten Zustand des Vorbausatzes gedrehten Stellung.

Dies ermöglicht ein einfaches und/oder einhändiges Überführen des Vorbaus von der Geradeausfahrposition in die platzsparende um 90 Grad gedrehte Stellung des Lenkers und/oder zurück

In einer alternativen Ausgestaltung, die größere Sicherheit gegen das Verlassen der Geradeausfahrposition aber trotzdem ein einfaches und/oder einhändiges Überführen in die Geradeausfahrposition erlaubt, weist der Vorbausatz mindestens ein Sperrelement am Vorbau und/oder an der Sperrvorrichtung auf, wobei das Sperrelement ein Rückstellelement aufweist/aufweisen, wobei das Rückstellelement eingerichtet ist das Sperrelement in einer ersten Position vorzuspannen und die Bewegung des Sperrelements in eine zweite Position gegen eine durch das Rückstellelement ausgeübte Kraft zu erlauben,
wobei der Vorbausatz so eingerichtet ist, dass in der gelösten Position der mindestens einen Klemmspange das Sperrelement in der ersten Position die Rotation des Vorbaus im auf dem Gabelschaft montierten Zustand des Vorbausatzes relativ zur Sperrvorrichtung in eine erste Rotationsrichtung, insbesondere unter Verbringung des Sperrelements in die zweite Position durch die relativ zueinander rotierenden Teile Vorbau und Sperrvorrichtung, nicht beschränkt, in eine der ersten Rotationsrichtung entgegengesetzte zweite Rotationsrichtung aber beschränkt, insbesondere in der vorbestimmte Rotationsstellung zusammen mit der mindestens einen ersten Ausnehmung und/oder dem mindestens einen ersten Vorsprung vollständig verhindert, nach manuellem Verbringen des Sperrelements in die zweite Position aber erlaubt.

Mit Vorteil ist in der verklemmten Position der mindestens einen Klemmspange das mindestens Spannmittel eine Rotation des Vorbaus um den Gabelschaft zumindest bis zu einem an dem Vorbau anliegenden Drehmoment von 150 Nm verhindert und/oder wobei in der verklemmten Position der mindestens einen Klemmspange der Vorbau mit dem Gabelschaft kraftschlüssig verbunden ist, wobei das notwendige Drehmoment zum Rotieren des Vorbaus um den Gabelschaft in der verklemmten Position mindestens 150 Nm beträgt.

Mit Vorteil ist die Sperrvorrichtung eingerichtet, den Gabelschaft zu umschließen und/oder weist sie eine Spannschraube, insbesondere eine direkte oder indirekte Spannschraube, auf, wobei die Sperrvorrichtung eingerichtet ist mittels der Spannschraube, mit dem Gabelschaft verklemmt zu werden. Insbesondere ist die Sperrvorrichtung eingereichter, so auf dem Gabelschaft verklemmt zu werden, dass eine Rotation um und eine Translation entlang des Gabelschafts unterbunden ist, zumindest bei Drehmoment von weniger als 150 Nm und/oder translativer Kraft von weniger als 250 N.

Mit Vorteil ist die Sperrvorrichtung eingerichtet, auf dem Gabelschaft unmittelbar unterhalb des Vorbaus, insbesondere zwischen Vorbau und einem oberen Lagerkonus angeordnet und/oder verklemmt zu werden und/oder eingerichtet, auf dem Gabelschaft oberhalb des Vorbaus, insbesondere zwischen Vorbau und einem ersten Ende des Gabelschafts, wobei das erste Ende einem zweiten einer Gabelscheide der Gabel nächstliegendem Ende gegenüberliegt, angeordnet und/oder verklemmt zu werden.

Gelöst wird die Aufgabe auch durch ein Fahrzeug mit einem, insbesondere einzigen einteiligen, runden Gabelschaft, insbesondere Fahrrad, aufweisend einen auf dem Gabelschaft montierten erfindungsgemäßen Vorbausatz. Dabei ist der Vorbausatz insbesondere wie vorstehend als vorteilhaft beschrieben ausgebildet und/oder auf dem Gabelschaft, insbesondere wie vorstehend als vorteilhaft beschrieben, angeordnet und/oder verklemmt. Dabei ist insbesondere die Sperrvorrichtung auf dem Gabelschaft verklemmt. Insbesondere ist auch ein Lenker am Vorbau befestigt.

Die nachfolgenden rein schematischen Figuren und ihre Beschreibung sollen das Verständnis der Erfindung erleichtern und die Erfindung nicht beschränken. Sie zeigen:
Fig. 1 eine erste Ausgestaltung eines erfindungsgemäßen Vorbausatzes im auf einem Gabelschaft montierten Zustand und
Fig. 2 eine zweite Ausgestaltung eines erfindungsgemäßen Vorbausatzes im auf einem Gabelschaft montierten Zustand.

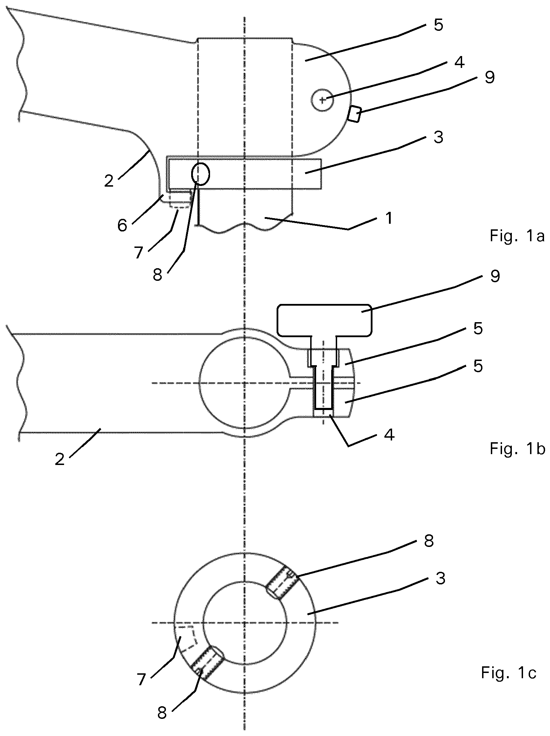

Fig. 1a zeigt eine seitliche Ansicht eines erfindungsgemäßen Vorbausatzes in einem auf einem Gabelschaft 1 montierten Zustand. Eine Sicherungsvorrichtung 3 in Form eines Rings ist auf dem Gabelschaft 1 verklemmt. Darüber auf dem Gabelschaft angeordnet ist ein Vorbau 2. Der Gabelschaft 1 ist auch im Bereich, in dem er vom Vorbausatz umschlossen und verdeckt ist, zur Veranschaulichung dennoch dargestellt. Der Gabelschaft 1 endet oben leicht über dem Ende des Vorbaus 2. Am anderen Ende des Gabelschafts, hier nicht gezeigt, befindet sich eine Gabel.

Der Vorbau weist Klemmspangen 5 auf, mit denen er mittels des als Flügelschraube ausgeführten Spannmittels 9 auf dem Gabelschaft 1 lösbar verklemmt werden kann. Er weist des Weiteren ein Sicherungselement 7 auf, das hakenförmig ausgeführt ist und die unter dem Vorbau 2 auf dem Gabelschaft 1 verklemmte Sperrvorrichtung umgreift. Die Sperrvorrichtung 3 weist einen nasenförmigen Vorsprung 7 auf, der die Rotation des Vorbaus um den Gabelschaft 1 relativ zur Sperrvorrichtung 3 begrenzt.

Fig. 1b zeigt einen Schnitt durch den Vorbau der Figur 1a. Gut zu erkennen sind hier die Klemmspangen 9, die mittels der Flügelschraube 9 aufeinander zu bewegt werden können, um den Vorbau 2 auf dem Gagelschaft lösbar zu verklemmen. Zu erkennen ist auch, dass an einer Klemmspange ein Gewinde 4 vorgesehen ist, in das die Flügelschraube 9 mit Ihrem Gewinde greift. Zu erkennen ist auch, dass in der anderen Klemmspange ein durchgehendes Loch mit einem größeren Sackloch kombiniert wurde, sodass sich eine Schulter bildet, auf der die in das Sackloch hineinragende Flügelschraube sich abstützt. Durch dieses Sackloch ist es möglich, die Flügelschraube 9 gegen eine Schraube mit einfachem Kopf auszutauschen, der dann in dem Sackloch versengt zu liegen kommen kann. Hier kann beispielsweise eine Inbusschraube verwendet werden. Dies erhöht die Sicherheit, insbesondere gegenüber Sabotage, erfordert aber die Verwendung eines Werkzeuges zum Überführen zwischen verklemmter und gelöster Position des Vorbaus.

Figur 1c zeigt einen Querschnitt durch die Sperrvorrichtung 3 aus Fig. 1a. Zu erkennen sind zwei Madenschrauben 8, mittels denen sie auf einem Gabelschaft verklemmt werden kann, wie in Fig. 1a gezeigt. Der auf der Oberfläche der Sperrvorrichtung angeordnete Vorsprung 7 ist gestrichelt angedeutet.

Ist in der Zusammenschau der Fig. 1 zu erkennen, dass bei auf dem Gabelschaft 1 mittels der Madenschrauben 8 verklemmter Sperrvorrichtung und bei gelöster Flügelschraube 9 der Vorbau um gut 315° auf dem Gabelschaft gedreht werden, aber nicht vom Gabelschaft abgenommen werden kann. Zudem kann der Vorbau in einer beliebigen der zugelassenen Rotationsstellungen mittels der Flügelschraube auf dem Gabelschaft so verklemmt werden, dass eine Rotation um den Gabelschaft nicht mehr möglich ist. Ebenfalls zu erkennen ist, dass bei entsprechender Ausrichtung der Sperrvorrichtung 3 vor deren Verklemmung mittels der Madenschrauben 8 auf dem Gabelschaft durch den Vorsprung 7 eine bestimmte Position, insbesondere die Geradeausfahrstellung dadurch definiert werden kann, dass zum Auffinden dieser Position der Vorbau bis zum Anschlag an den Vorsprung gedreht werden kann. Dabei ist zur Einnahme der vorbestimmten Position darauf zu achten, dass von der vorbestimmten Richtung an den Vorsprung 7 angeschlagen wird.

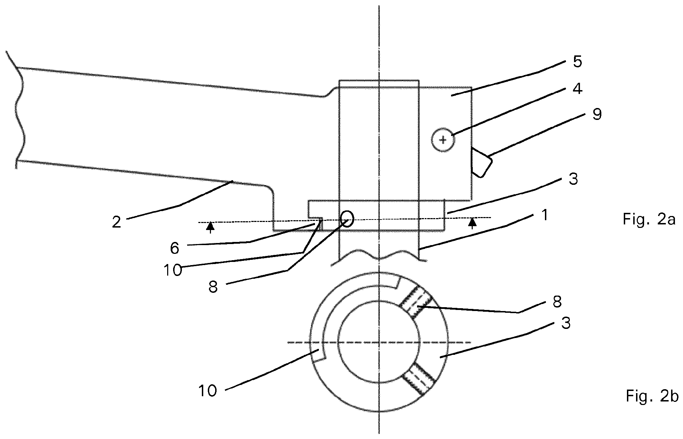

Figur 2a zeigt eine Ansicht wie in Figur 1a, jedoch von einer alternativen Ausgestaltung eines Vorbausatzes, montiert auf einem Gabelschaft 1. Hier steht der Gabelschaft 1 leicht über den Vorbau 2 nach oben hinaus. Am anderen Ende des Gabelschafts, hier nicht gezeigt, befindet sich eine Gabel. Eine Sicherungsvorrichtung 3 in Form eines Rings ist auf dem Gabelschaft 1 verklemmt. Darüber auf dem Gabelschaft angeordnet ist ein Vorbau 2. Der Gabelschaft 1 ist auch im Bereich, in dem er vom Vorbausatz umschlossen und verdeckt ist, zur Veranschaulichung dennoch dargestellt.

Der Vorbau 2 weist Klemmspangen 5 auf, mit denen er mittels des als Flügelschraube ausgeführten Spannmittels 9 auf dem Gabelschaft 1 lösbar verklemmt werden kann. Er weist des Weiteren ein Sicherungselement 7 auf, das hakenförmig ausgeführt ist und die unter dem Vorbau 2 auf dem Gabelschaft 1 verklemmte Sperrvorrichtung umgreift

Figur 2b zeigt einen Querschnitt durch die Sperrvorrichtung 3 aus Fig. 2a, wobei die Schnittebene in Figur 2a knapp unterhalb des Rücksprungs 10 verläuft und wobei die Aufsicht in Fig. 2a von unten erfolgt, wie dort mit entsprechenden Pfeilen auf die gestrichelt dargestellte Schnittlinie gekennzeichnet. Dadurch ist auch der Verlauf des Rücksprungs 10 zu erkennen, der über gut 100° am äußeren Umfang geführt ist. Zu erkennen sind des Weiten zwei Madenschrauben 8, mittels denen sie auf einem Gabelschaft verklemmt werden kann, wie in Fig. 2a gezeigt.

In dem Rücksprung 10 läuft, wie in Fig. 2a erkennbar ist, ein Sicherungselement 7 des Vorbaus, das hakenförmig ausgeführt ist und die unter dem Vorbau 2 auf dem Gabelschaft 1 verklemmte Sperrvorrichtung umgreift.

Dadurch, dass der Rücksprung 10, in den das Sicherungselement 7 greift, nur über einen beschränkten Winkelbereich ausgeführt ist, ist die Rotationsfreiheit des Vorbaus auf dem Gabelschaft gegenüber der Sicherungsvorrichtung 3 begrenzt, hier auf etwa 90°. Ein dadurch gegebener Anschlag kann dabei, je nach Montageausrichtung der Sicherungsvorrichtung 3 auf dem Gabelschaft 1, die Geradeausfahrposition sicher und einfach auffindbar gestalten.

Gezeigt wurde in den Figuren jeweils ein einfacher Vorbau. Die Erfindung kann aber auch mit komplexeren Vorbauten genutzt werden, beispielsweise mit solchen die eine Neigungs- und/oder Höhenverstellung aufweisen.

### Bezugszeichenliste

- 1: Gabelschaft
- 2: Vorbau
- 3: Sperrvorrichtung
- 4: Gewinde
- 5: Klemmspange
- 6: Sicherungselement
- 7: Vorsprung
- 8: Sperrvorrichtungsspannmittel
- 9: Spannmittel
- 10: Rücksprung

## Patentansprüche

1. Vorbausatz (2, 3) für ein Fahrrad mit einem, insbesondere einzigen einteiligen, runden Gabelschaft (1), aufweisend einen Vorbau (2), wobei der Vorbau mindestens eine lösbare Klemmspange (5) zum Umschließen des runden Gabelschafts (1) und mindestens ein Spannmittel (9) zum reversibel lösbaren Verklemmen der mindestens einen Klemmspange (5) auf dem Gabelschaft (1) aufweist, wobei die mindestens eine Klemmspange (5) so eingerichtet ist, dass sie in einer durch das mindestens eine Spannmittel (9) auf dem Gabelschaft verklemmten Position eine Rotation des Vorbaus (2) um den Gabelschaft (1) verhindert und in einer gelösten Position die Rotation des Vorbaus um den Gabelschaft nicht verhindert, wobei das mindestens eine Spannmittel (9) einen Handgriffabschnitt zum Bewegen mittels einer Hand, wobei die Bewegung des Handriffabschnitts in eine erste Richtung oder Drehrichtung ein reversibles Verklemmen der mindestens einen Klemmspange auf dem Gabelschaft mittels des Spannmittels bewirkt und wobei die Bewegung des Handriffabschnitts in eine zweite, insbesondere der ersten entgegengesetzte, Richtung oder Drehrichtung ein reversibles Lösen der Verklemmung der mindestens einen Klemmspange auf dem Gabelschaft bewirkt, aufweist und/oder so ausgelegt ist, dass mit dem mindestens einen Spannmittel, insbesondere mit einer menschlichen Hand, insbesondere werkzeuglos, die mindestens eine Klemmspange von der verklemmten in die gelöste und von der gelösten in die verklemmte Position überführt werden kann, insbesondere das Spannmittel ein Schnellspanner, eine Flügelmutter, Flügelschraube, Rändelschraube und/oder Knebelschraube ist, und dass der Vorbausatz mindestens eine mit dem Gabelschaft (1) ortsfest verbindbare, insbesondere verklemmbare, Sperrvorrichtung (3) aufweist, wobei die Sperrvorrichtung (3) mit dem Vorbau durch eine Begrenzung der Bewegung des Vorbaus entlang des Gabelschafts das Abziehen des Vorbaus vom Gabelschaft verhindert , **dadurch gekennzeichnet, dass** die Sperrvorrichtung (3) zum Verhindern des Abziehens mindestens ein Sicherungselement aufweist, welches hinter den Vorbau (2) greift und/oder der Vorbau (2) zum Verhindern des Abziehens mindestens ein Sicherungselement (6) aufweist, welches hinter die Sperrvorrichtung (3) greift.

2. Vorbausatz nach dem voranstehenden Anspruch **dadurch gekennzeichnet, dass** die Sperrvorrichtung (3) und/oder der Vorbau (2) mindestens einen ersten Vorsprung (7) und/oder mindestens eine erste Ausnehmung (10) zum Begrenzen der Rotation des Vorbaus (2) auf dem Gabelschaft (1) relativ zur Sperrvorrichtung (3) im auf dem Gabelschaft montierten Zustand des Vorbausatz aufweist und/oder aufweisen, wobei insbesondere die mindestens eine erste Ausnehmung und/oder der mindestens eine erste Vorsprung derart ausgebildet und/oder angeordnet ist und/oder sind, dass die Begrenzung beim Anschlag an die Begrenzung eine vorbestimmte Rotationsstellung des Vorbaus relativ zur Sperrvorrichtung definiert, wobei der mindestens eine erste Vorsprung und/oder die mindestens eine erste Ausnehmung in der gelösten Position der Klemmspange die Rotation des Vorbaus um den Gabelschaft auf einen Rotationswinkels von weniger als 360° beschränkt.

3. Vorbausatz nach vorangehendem Anspruch, wobei der Vorbausatz eingerichtet ist, im auf dem Gabelschaft montierten Zustand des Vorbausatz in der gelösten Position der Klemmspange eine Rotation des Vorbaus um den Gabelschaft relativ zur Sperrvorrichtung in einer ersten Rotationsrichtung in die durch die Begrenzung vorbestimmte Rotationsstellung des Vorbaus relativ zur Sperrvorrichtung zu erlauben, in einer zweiten der ersten Rotationsrichtung entgegengesetzten Rotationsrichtung aber zu verhindern, insbesondere so, dass dies ohne Demontage des Vorbausatz nicht möglich ist.

4. Vorbausatz nach einem der vorangehendem Ansprüche 3 oder 4, wobei die mindestens eine erste Ausnehmung und/oder der mindestens eine erste Vorsprung im auf dem Gabelschaft montierten Zustand des Vorbausatz in der gelösten Position der Klemmspange eine Rotation des Vorbaus um den Gabelschaft relativ zur Sperrvorrichtung von mindestens 10° erlaubt und eine Rotation des Vorbaus um den Gabelschaft relativ zur Sperrvorrichtung so auf weniger als 360° begrenzt, dass eine Rotation um 360° nur nach Demontage des Vorbausatz möglich ist.

5. Vorbausatz nach einem der der Ansprüche 1 oder 2, wobei der Vorbausatz mindestens ein Sperrelement am Vorbau und/oder an der Sperrvorrichtung aufweist wobei das Sperrelement ein Rückstellelement aufweist/aufweisen, wobei das Rückstellelement eingerichtet ist das Sperrelement in einer ersten Position vorzuspannen und die Bewegung des Sperrelements in eine zweite Position gegen eine durch das Rückstellelement ausgeübte Kraft zu erlauben,
wobei der Vorbausatz so eingerichtet ist, dass in der gelösten Position der mindestens einen Klemmspange das Sperrelement in der ersten Position die Rotation des Vorbaus im auf dem Gabelschaft montierten Zustand des Vorbausatzes relativ zur Sperrvorrichtung in eine erste Rotationsrichtung, insbesondere unter Verbringung des Sperrelements in die zweite Position durch die relativ zueinander rotierenden Teile Vorbau und Sperrvorrichtung, nicht beschränkt, in eine der ersten Rotationsrichtung entgegengesetzte zweite Rotationsrichtung aber beschränkt, insbesondere in der vorbestimmte Rotationsstellung zusammen mit der mindestens einen ersten Ausnehmung und/oder dem mindestens einen ersten Vorsprung vollständig verhindert, nach manuellem Verbringen des Sperrelements in die zweite Position aber erlaubt.

6. Vorbausatz nach einem der voranstehenden Ansprüche, wobei in der verklemmten Position der mindestens einen Klemmspange das mindestens Spannmittel eine Rotation des Vorbaus um den Gabelschaft bis zu einem an dem Vorbau anliegenden Drehmoment von 150 Nm verhindert und/oder wobei in der verklemmten Position der mindestens einen Klemmspange der Vorbau mit dem Gabelschaft kraftschlüssig verbunden ist, wobei das notwendige Drehmoment zum Rotieren des Vorbaus um den Gabelschaft mindestens 150 Nm beträgt.

7. Vorbausatz nach einem der voranstehenden Ansprüchen **dadurch gekennzeichnet, dass** die Sperrvorrichtung eingerichtet ist, den Gabelschaft zu umschließen und/oder eine Spannschraube insbesondere eine direkte oder indirekte Spannschraube, aufweist, wobei die Sperrvorrichtung eingerichtet ist mittels der Spannschraube, mit dem Gabelschaft verklemmt zu werden, sodass eine Rotation um und eine Translation entlang des Gabelschafts unterbunden ist, zumindest bei Drehmoment von weniger als 150 Nm und/oder translativer Kraft von weniger als 250 N.

8. Vorbausatz nach einem der voranstehenden Ansprüchen **dadurch gekennzeichnet, dass** die Sperrvorrichtung eingerichtet ist, auf dem Gabelschaft unmittelbar unterhalb des Vorbaus, insbesondere zwischen Vorbau und einem oberen Lagerkonus, oder eingerichtet ist auf dem Gabelschaft oberhalb des Vorbaus, insbesondere zwischen Vorbau und einem ersten Ende des Gabelschafts, wobei das erste Ende einem zweiten einer Gabelscheide der Gabel nächstliegendem Ende gegenüberliegt, angeordnet zu werden.

9. Fahrrad mit einem, insbesondere einzigen einteiligen, runden Gabelschaft, aufweisend einen auf dem Gabelschaft montierten Vorbausatz nach einem der vorstehenden Ansprüche.

## Claims

1. A stem unit (2, 3) for a bicycle with a, in particular a single one-piece, round fork steerer tube (1), comprising a stem (2), wherein the stem has at least one releasable clamping clip (5) for enclosing the round fork steerer tube (1) and at least one clamping means (9) for reversibly releasably clamping said at least one clamping clip (5) on the fork steerer tube (1), wherein said at least one clamping clip (5) is arranged to prevent rotation of the stem (2) about the steerer tube (1) in a position clamped by said at least one clamping means (9) on the steerer tube and to not prevent rotation of the stem about the steerer tube in a released position, wherein said at least one clamping means (9) comprises a hand grip portion for movement by means of a hand, wherein the movement of the hand grip section in a first direction or direction of rotation effects a reversible clamping of said at least one clamping clip on the steerer tube by means of the clamping means, and wherein the movement of the hand grip section in a second direction or direction of rotation, in particular opposite to the first, effects a reversible release of the clamping of said at least one clamping clip on the steerer tube, and/or is designed in such a way that said at least one clamping means, in particular a human hand, in particular without tools, can be used to transfer said at least one clamping clip from the clamped position into the released position and from the released position into the clamped position, in particular the clamping means is a quick-release clamp, a wing nut, wing screw, knurled screw and/or tommy screw, and
in that the stem unit has at least one locking device (3) which can be fixedly connected, in particular clamped, to the steerer tube (1), the locking device (3) preventing the stem from being pulled off the steerer tube by limiting the movement of the stem along the steerer tube, **characterised in that** the locking device (3) has at least one securing element which engages behind the stem (2) to prevent removal and/or the stem (2) has at least one securing element (6) which engages behind the locking device (3) to prevent removal.

2. A stem unit according to the preceding claim, **characterised in that** the locking device (3) and/or the stem (2) has and/or have at least one first projection (7) and/or at least one first recess (10) for limiting the rotation of the stem (2) on the steerer tube (1) relative to the locking device (3) when the stem unit is mounted on the steerer tube, wherein in particular said at least one first recess and/or said at least one first projection is and/or are formed and/or arranged in such a way that the limitation defines a predetermined rotational position of the stem relative to the locking device when abutting the limitation, wherein said at least one first projection and/or said at least one first recess in the released position of the clamping clip limits the rotation of the stem about the steerer tube to an angle of rotation of less than 360°.

3. A stem unit according to the preceding claim, wherein the stem unit is set up, in the state of the stem unit mounted on the steerer tube in the released position of the clamping clip, to permit a rotation of the stem about the steerer tube relative to the locking device in a first direction of rotation into the rotational position of the stem relative to the locking device predetermined by the limitation, but to prevent it in a second direction of rotation opposite to the first direction of rotation, in - particular in such a way that this is not possible without dismantling the stem unit.

4. A stem unit according to any one of the preceding claims 3 or 4, wherein said at least one first recess and/or said at least one first protrusion, when the stem unit is mounted on the steerer tube in the released position of the clamp, allows a rotation of the stem about the steerer tube relative to the locking device of at least 10° and limits a rotation of the stem about the steerer tube relative to the locking device to less than 360° such that a rotation of 360° is only possible after disassembly of the stem unit.

5. A stem unit according to any one of claims 1 or 2, the stem unit comprising at least one locking member on the stem and/or on the locking device, the locking member comprising a return member, the return member being arranged to bias the locking member in a first position and to allow movement of the locking member into a second position against a force exerted by the return member,
wherein the stem unit is arranged in such a way that in the released position of said at least one clamping clip the locking element in the first position prevents the rotation of the stem in the state of the stem unit mounted on the steerer tube relative to the locking device in a first direction of rotation, in particular with movement of the locking element into the second position by the parts of stem and locking device rotating relative to one another, not restricted, but restricted in a second direction of rotation opposite to the first direction of rotation, in particular completely prevented in the predetermined rotational position together with said at least one first recess and/or said at least one first projection, but permitted after manual bringing of the locking element into the second position.

6. A stem unit according to one of the preceding claims, wherein, in the clamped position of said at least one clamping clip, said at least clamping means prevents rotation of the stem about the steerer tube up to a torque of 150 Nm applied to the stem and/or wherein, in the clamped position of said at least one clamping clip, the stem is non-positively connected to the steerer tube, the torque required to rotate the stem about the steerer tube being at least 150 Nm.

7. A stem unit according to one of the preceding claims, **characterised in that** the locking device is arranged to enclose the steerer tube and/or comprises a clamping screw, in particular a direct or indirect clamping screw, the locking device being arranged to be clamped to the steerer tube by means of the clamping screw, so that rotation about and translation along the steerer tube is prevented, at least at a torque of less than 150 Nm and/or a translational force of less than 250 N.

8. A stem unit according to one of the preceding claims, **characterised in that** the locking device is arranged to be disposed on the steerer tube directly below the stem, in particular between the stem and an upper bearing cone, or is arranged to be disposed on the steerer tube above the stem, in particular between the stem and a first end of the steerer tube, the first end being opposite a second end nearest a fork blade of the fork.

9. A bicycle with a, in particular, single one-piece round steerer tube, comprising a stem unit mounted on the steerer tube according to one of the preceding claims.

## Revendications

1. Ensemble de potence (2, 3) pour une bicyclette avec un tube de direction de fourche rond (1), en particulier d'une seule pièce, comprenant une potence (2), dans laquelle la potence comprend au moins une pince de serrage libérable (5) pour enfermer le tube de direction de fourche rond (1) et au moins un moyen de serrage (9) pour serrer de manière libérable et réversible ladite au moins une pince de serrage (5) sur le tube de direction de fourche (1), dans lequel ledit au moins un clip de serrage (5) est agencé pour empêcher la rotation de la potence (2) autour du tube du pivot de fourche (1) dans une position serrée par ledit au moins un moyen de serrage (9) sur le tube du pivot de fourche et pour ne pas empêcher la rotation de la potence autour du tube du pivot de fourche dans une position libérée, dans lequel ledit au moins un moyen de serrage (9) comprend une partie de poignée pour un mouvement au moyen d'une main, dans lequel le mouvement de la section de poignée dans une première direction ou un premier sens de rotation effectue un serrage réversible de ladite au moins une pince de serrage sur le tube du pivot de direction au moyen du moyen de serrage, et dans lequel le mouvement de la section de poignée dans une seconde direction ou un second sens de rotation, en particulier opposé au premier, effectue un relâchement réversible du serrage de ladite au moins une pince de serrage sur le tube du pivot de direction, et/ou est conçu de telle sorte que ledit au moins un moyen de serrage, en particulier une main humaine, en particulier sans outils, peut être utilisé pour transférer ledit au moins un clip de serrage de la position serrée à la position libérée et de la position libérée à la position serrée, en particulier le moyen de serrage est un collier de serrage rapide, un écrou à ailettes, une vis à ailettes, une vis moletée et/ou une vis Tommy, et
en ce que l'ensemble de potence présente au moins un dispositif de verrouillage (3) qui peut être relié de manière fixe, en particulier par serrage, au tube de direction (1), le dispositif de verrouillage (3) empêchant que la potence soit retirée du tube de direction en limitant le mouvement de la potence le long du tube de direction, **caractérisé en ce que** le dispositif de verrouillage (3) présente au moins un élément de sécurité qui s'engage derrière la potence (2) pour empêcher son retrait et/ou la potence (2) présente au moins un élément de sécurité (6) qui s'engage derrière le dispositif de verrouillage (3) pour empêcher son retrait.

2. Ensemble de potence selon la revendication précédente, **caractérisé en ce que** le dispositif de verrouillage (3) et/ou la potence (2) a et/ou ont au moins une première saillie (7) et/ou au moins un premier évidement (10) pour limiter la rotation de la potence (2) sur le tube de direction (1) par rapport au dispositif de verrouillage (3) lorsque l'ensemble de potence est montée sur le tube de direction, dans lequel, en particulier, ledit au moins un premier évidement et/ou ladite au moins une première saillie est et/ou sont formés et/ou agencés de telle sorte que la limitation définit une position de rotation prédéterminée de la potence par rapport au dispositif de verrouillage lorsqu'elle bute sur la limitation, dans lequel ladite au moins une première saillie et/ou ledit au moins un premier évidement dans la position libérée de l'attache de serrage limite la rotation de la potence autour du tube de direction à un angle de rotation inférieur à 360°.

3. Ensemble de potence selon la revendication précédente, dans lequel l'ensemble de potence est configuré, avec l'ensemble de potence monté sur le tube de direction dans la position libérée du clip de serrage, pour permettre une rotation de la potence autour du tube de direction par rapport au dispositif de verrouillage dans un premier sens de rotation dans la position de rotation de la potence par rapport au dispositif de verrouillage prédéterminée par la limitation, mais pour l'empêcher dans un second sens de rotation opposé au premier sens de rotation, en particulier de telle sorte que cela ne soit pas possible sans démonter l'ensemble de potence.

4. Ensemble de potence selon l'une quelconque des revendications précédentes 3 ou 4, dans lequel ledit au moins un premier évidement et/ou ladite au moins une première saillie, lorsque l'ensemble de potence est monté sur le tube de direction dans la position relâchée du collier, permet une rotation de la potence autour du tube de direction par rapport au dispositif de verrouillage d'au moins 10° et limite une rotation de la potence autour du tube de direction par rapport au dispositif de verrouillage à moins de 360° de sorte qu'une rotation de 360° n'est possible qu'après le démontage de l'ensemble de potence.

5. Ensemble de potence selon l'une quelconque des revendications 1 ou 2, l'ensemble de potence comprenant au moins un organe de verrouillage sur la potence et/ou sur le dispositif de verrouillage, l'organe de verrouillage comprenant un organe de rappel, l'organe de rappel étant agencé pour solliciter l'organe de verrouillage dans une première position et pour permettre le déplacement de l'organe de verrouillage dans une seconde position à l'encontre d'une force exercée par l'organe de rappel,
dans lequel l'ensemble de potence est disposé de telle sorte que, dans la position libérée de ladite au moins une pince de serrage, l'élément de verrouillage dans la première position empêche la rotation de la potence, avec l'ensemble de potence monté sur le tube de direction par rapport au dispositif de verrouillage dans une première direction de rotation, en particulier avec le déplacement de l'élément de verrouillage dans la seconde position par les parties de la potence et du dispositif de verrouillage tournant l'une par rapport à l'autre, non limité, mais limité dans un second sens de rotation opposé au premier sens de rotation, en particulier complètement empêché dans la position de rotation prédéterminée avec ledit au moins un premier évidement et/ou ladite au moins une première saillie, mais autorisé après avoir amené manuellement l'élément de verrouillage dans la seconde position.

6. Ensemble de potence selon l'une des revendications précédentes, dans lequel, dans la position serrée de ladite au moins une pince de serrage, ledit au moins un moyen de serrage empêche la rotation de la potence autour du pivot de fourche jusqu'à un couple de 150 Nm appliqué à la potence et/ou dans laquelle, dans la position serrée de ladite au moins une pince de serrage, la potence est connectée de manière non positive au pivot de fourche, le couple requis pour faire tourner la potence autour du pivot de fourche étant d'au moins 150 Nm.

7. Ensemble de potence selon l'une des revendications précédentes, **caractérisé en ce que** le dispositif de verrouillage est agencé pour entourer le tube de direction et/ou comprend une vis de serrage, en particulier une vis de serrage directe ou indirecte, le dispositif de verrouillage étant agencé pour être serré sur le tube de direction au moyen de la vis de serrage, de sorte que la rotation autour du tube de direction et la translation le long de celui-ci sont empêchées, au moins à un couple inférieur à 150 Nm et/ou à une force de translation inférieure à 250 N.

8. Ensemble de potence selon l'une des revendications précédentes, **caractérisé en ce que** le dispositif de verrouillage est agencé pour être disposé sur le tube de potence directement sous la potence, notamment entre la potence et un cône d'appui supérieur, ou est agencé pour être disposé sur le tube de potence au-dessus de la potence, notamment entre la potence et une première extrémité du tube de potence, la première extrémité étant opposée à une seconde extrémité la plus proche d'une lame de fourche de la fourche.

9. Bicyclette avec un tube de direction rond, en particulier d'une seule pièce, comprenant un ensemble de potence montée sur le tube de direction selon l'une des revendications précédentes.
